# EUROPÄISCHE PATENTSCHRIFT

(11) **EP 2 702 283 B1**
(45) Veröffentlichungstag und Bekanntmachung des Hinweises auf die Patenterteilung: **29.07.2015**
(21) Anmeldenummer: 12729507.9
(22) Anmeldetag: 15.06.2012
(51) Int. Cl.: F16C 17/03

(54) **KIPPSEGMENTRADIALLAGER FÜR EINE EINWELLENSTRÖMUNGSMASCHINE**
TILTING-SEGMENT RADIAL BEARING FOR A SINGLE-SHAFT TURBOMACHINE
PALIER RADIAL À SEGMENT BASCULANT DESTINÉ À UNE TURBOMACHINE À ARBRE UNIQUE

(30) Priorität: 20.07.2011 EP 11174611
(43) Veröffentlichungstag der Anmeldung: 05.03.2014
(73) Patentinhaber: Siemens Aktiengesellschaft, 80333 München (DE)
(72) Erfinder: BRAHM, Bernadette, 44879 Bochum (DE); BÖCKEL, Frank, 53773 Hennef (DE); DETTMAR, Diethelm, 46485 Wesel (DE); DROSCHINSKI, Anna Christina, 45481 Mülheim an der Ruhr (DE); LÜNEBURG, Bernd, 45481 Mülheim an der Ruhr (DE); MERMERTAS, Ümit, 45478 Mülheim an der Ruhr (DE); SOGGEBERG, Jan, 46286 Dorsten (DE); STRÄNGER, Marcel, 45479 Mülheim an der Ruhr (DE); WINKLER, Andreas, 47239 Duisburg (DE)
(86) Internationale Anmeldenummer: PCT/EP2012/061433
(87) Internationale Veröffentlichungsnummer: WO 2013/010735

(56) Entgegenhaltungen:
- DE-A1- 1 425 111
- FR-A1- 2 574 503
- US-A- 3 497 276

## Beschreibung

Die Erfindung betrifft ein Kippsegmentradiallager für eine Einwellenströmungsmaschine.

Eine Strömungsmaschine, wie z.B. eine Einwellenströmungsmaschine, weist einen Rotor mit einer Welle auf. Für eine Lagerung der Welle kommt u.a. ein Kippsegmentradiallager in Frage, in dem die Welle um ihre Achse rotieren kann. Das Kippsegmentradiallager weist in der Regel drei oder vier Kippsegmente auf, wobei zwischen unteren und oberen Kippsegmenten unterschieden wird. Die unteren Kippsegmente tragen die Gewichtskraft der Welle, die über die unteren Kippsegmente, den Stützring und das Lagergehäuse in ein Fundament abgeleitet wird. Die oberen Kippsegmente verhindern in einem Störfall ein Abheben der Welle von den unteren Kippsegmenten und wirken auf die Welle schwingungsdämpfend. Die oberen Kippsegmente liegen entweder lose auf der Welle oder sie werden mittels Federn auf die Welle gedrückt.

Zum Schmieren und zum Kühlen wird durch die Kippsegmente ein Öl in den Dichtspalt zwischen der Welle und den Gleitflächen der Kippsegmente geströmt. Bei einer Rotation der Welle bildet sich ein hydrodynamischer Ölfilm, auf dem die Welle "schwimmt". Treten Unwuchten bei der Rotation auf, so können Schwingungen auftreten. Liegen die oberen Kippsegmente lose auf der Welle, so kann von ihnen nur eine geringe Schwingungsdämpfung ausgehen. Herkömmlich werden zur Schwingungsdämpfung die oberen Kippsegmente mittels Federn auf die Welle gedrückt. Wird die Maschine abgeschaltet, so muss die Welle in einem sogenannten Turnbetrieb langsam gedreht werden, so dass sie beim Abkühlen nicht durchbiegt. In diesem Turnbetrieb sowie beim Anfahren der Maschine ist es jedoch nachteilig, dass die oberen Kippsegmente auf die Welle drücken, da dadurch Beschädigungen an den Gleitflächen der Kippsegmente und der Oberfläche der Welle verursacht werden können. Ferner kann nur eine geringe Menge Öl in den Dichtspalt geströmt werden, so dass sich nur eine geringe Kühlung ergibt. Des Weiteren werden aufgrund des schlechten Gleitverhaltens im Turnbetrieb hohe Antriebskräfte benötigt, wodurch sich der Wirkungsgrad der Maschine verringert.

In FR 2574503 A1 ist ein hydrodynamisches Lager beschrieben, bei dem in dem Spalt zwischen einer Welle und einem Kippsegment ein Fluid sich befindet, welches mit einer Druckkammer in Verbindung steht, wobei die Druckkammer einen Druck auf das Kippsegment ausübt. Weitere Lager sind in US 3 497 276 A und DE 14 25 111 A1 beschrieben.

Aufgabe der Erfindung ist es, ein Kippsegmentradiallager für eine Einwellenströmungsmaschine zu schaffen, wobei das Kippsegmentradiallager eine gute Schwingungsdämpfung ermöglicht und im Betrieb gut kühlbar ist.

Das erfindungsgemäße Kippsegmentradiallager für eine Einwellenströmungsmaschine weist einen Stützring, eine Kippsegmenthalterung und ein Kippsegment auf, das im Einbauzustand des Kippsegmentradiallagers obenliegend und radial verschiebbar von der Kippsegmenthalterung an dem Stützring abgestützt ist, die eine Vorspanneinrichtung aufweist, mit der das Kippsegment in Richtung zur Welle der Einwellenströmungsmaschine hin vorgespannt ist, wenn die Betriebsdrehzahl der Einwellenströmungsmaschine oberhalb einer vorherbestimmten Kippsegmentvorspanndrehzahl liegt, so dass, wenn die Betriebsdrehzahl der Einwellenströmungsmaschine unterhalb der Kippsegmentvorspanndrehzahl liegt, das Kippsegment vorspannungsfrei radial beweglich ist.

Bei einer geringen Drehzahl der Einwellenströmungsmaschine ist der Abstand der Welle zu den unteren Kippsegmenten gering, weil sich kein hydrodynamischer Ölfilm ausbilden kann, auf dem die Welle "schwimmt". Das Kippsegment des erfindungsgemäßen Kippsegmentradiallagers liegt in diesem Fall nur mit seiner Gewichtskraft auf der Welle. Wird die Drehzahl der Welle erhöht, bildet sich der hydrodynamische Ölfilm aus, der die Welle anhebt. Wird die vorherbestimmte Kippsegmentvorspanndrehzahl überschritten, so hat die Welle einen so großen Abstand von den unteren Kippsegmenten, dass die Vorspanneinrichtung des erfindungsgemäßen Kippsegmentradiallagers vorteilhaft über das Kippsegment einen Druck auf die Welle ausübt.

Die Vorspanneinrichtung ist bevorzugt eingerichtet, dass die Vorspannung des Kippsegments beim Betrieb der Einwellenströmungsmaschine mit einer Betriebsdrehzahl oberhalb der Kippsegmentvorspanndrehzahl mit der Betriebsdrehzahl der Einzellenströmungsmaschine zunimmt. Die Vorspanneinrichtung weist bevorzugt eine Tellerfeder auf, die an dem Stützring und an dem Kippsegment radial abgestützt ist. Des Weiteren ist die Vorspanneinrichtung erfindungsgemäß eingerichtet, dass die Vorspannung des Kippsegments beim Betrieb der Einwellenströmungsmaschine bei der Vorspanndrehzahl eine vorherbestimmte Schwellenvorspannung hat. Erfindungsgemäß weist die Kippsegmenthalterung ein Halteteil mit einem Arretiermittel, einem am Stützring radialverschiebbar gelagerten Schaft und einem Teller auf, an dem radial innenseitig das Kippsegment und radial außenseitig die Vorspanneinrichtung abgestützt sind, wobei mit dem Arretiermittel der Schaft derart am Stützring begrenzt festgelegt ist, dass, wenn die Betriebsdrehzahl der Einwellenströmungsmaschine gleich der Kippsegmentvorspanndrehzahl ist, das Kippsegment an dem Teller abgestützt und von der Vorspanneinrichtung mit der Schwellenvorspannung vorgespannt ist.

Bevorzugtermaßen ist die Radialbewegung des Kippsegments nach außen begrenzt. Ferner weist der Teller bevorzugt an seiner radial außen liegenden Seite zum Anschlagen an den Stützring einen Anschlag auf, durch den die Radialbewegung des Kippsegments nach außen begrenzt ist. Des Weiteren steht der Schaft bevorzugt von dem Teller radial nach innen mit einem Vorsprung vor, der mit dem Kippsegment in Eingriff steht, so dass das Kippsegment radial verschiebbar und in Umfangsrichtung fest gelagert ist. Bevorzugtermaßen weist die Kippsegmenthalterung einen Haltestift auf, mit dem die minimale radiale Position des Kippsegmentradiallagers so begrenzt ist, dass das Kippsegment mit dem Vorsprung nicht außer Eingriff gerät. Ferner ist das Halteteil bevorzugt bei seinem Radialverschieben am Stützring radialgeführt.

Rotiert die Einwellenströmungsmaschine mit einer Drehzahl unterhalb der Kippsegmentvorspanndrehzahl, so kann sich das Kippsegment des erfindungsgemäßen Kippsegmentradiallagers vorteilhaft radialgeführt an dem Vorsprung des Schaftes frei bewegen. Erreicht die Drehzahl der Maschine die Kippsegmentvorspanndrehzahl, so wirkt vorteilhaft zusätzlich zu der Gewichtskraft des Kippsegments eine Kraft, die von der vorherbestimmten Schwellenvorspannung der Tellerfeder herrührt. Ferner können durch die Tellerfeder Schwingungen der Welle vorteilhaft gedämpft werden.

Im Folgenden wird eine bevorzugte Ausführungsform des erfindungsgemäßen Kippsegmentradiallagers anhand der beigefügten schematischen Zeichnungen erläutert. Es zeigt:
- Figur 1: einen Querschnitt der Ausführungsform des erfindungsgemäßen Kippsegmentradiallagers mit einem oben liegenden Kippsegment.
- Figur 2: einen Längsschnitt durch das oben liegende Kippsegment der Ausführungsform.

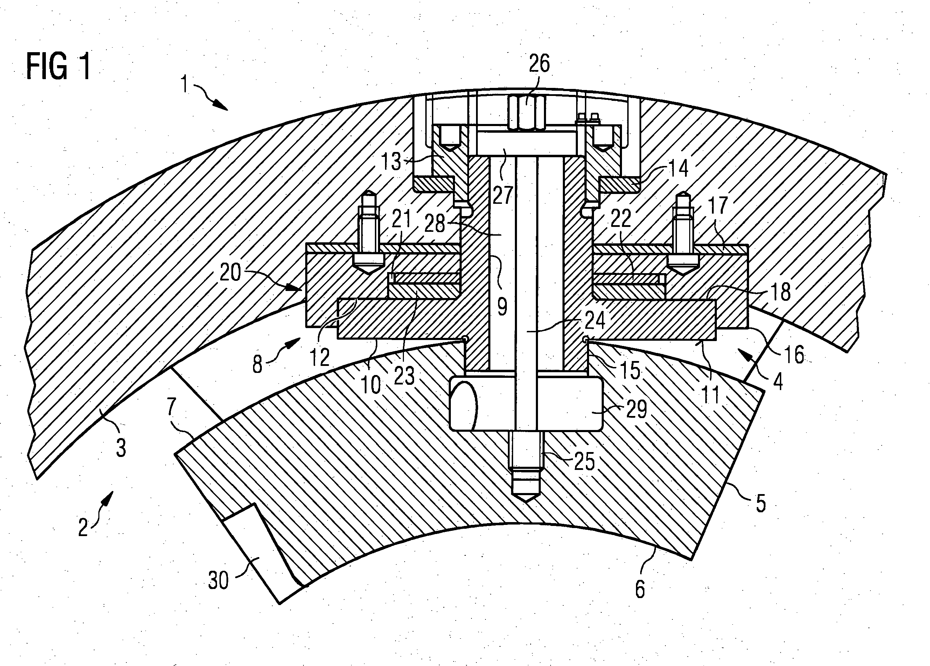

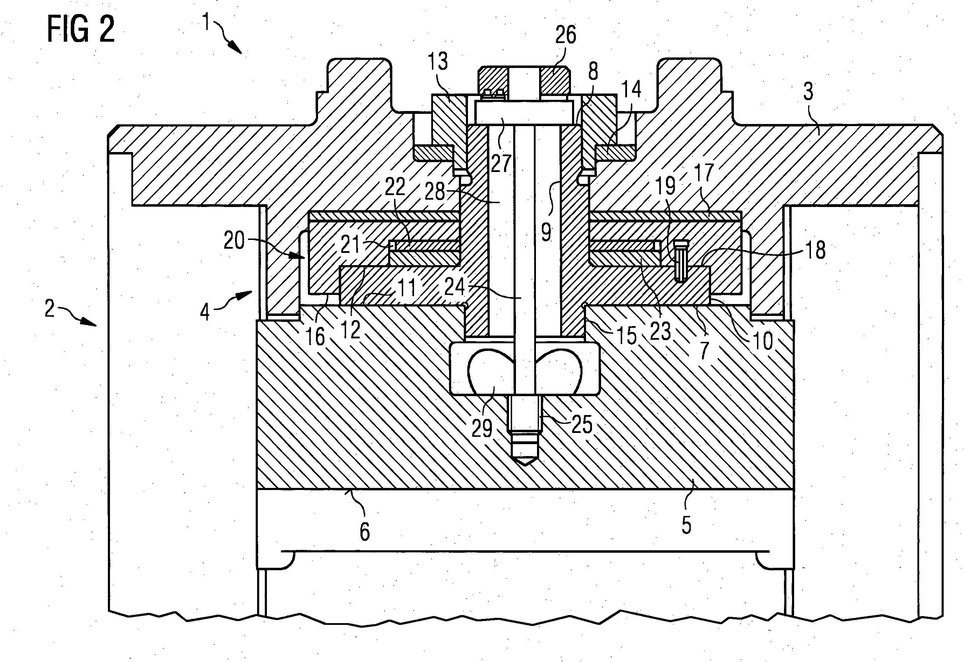

Wie es aus Figur 1 und 2 ersichtlich ist, weist ein Kippsegmentradiallager 1 in seiner oberen Lagerhälfte 2 einen Stützring 3, ein Kippsegment 5 sowie eine Kippsegmenthalterung 4 auf, mit der das Kippsegment 5 an dem Stützring 3 befestigt ist. An der radialen Innseite des Kippsegments 4 befindet sich die Kippsegmentgleitfläche 6, welche eine Zylinderfläche ist, dessen Rotationsachse im Einbauzustand mit der Maschinenachse zusammenfällt. Im Einbauzustand liegt das Kippsegment 5 auf einer Welle. Das Kippsegment 5 weist auf der der Kippsegmentgleitfläche 6 abgewandten Seite einen Kippsegmentrücken 7 auf, welcher parallel zu der Kippsegmentgleitfläche 6 ist.

Wie es aus Figur 1 und 2 ersichtlich ist, weist die Kippsegmenthalterung 4 ein hohl ausgebildetes Halteteil 8 auf, welches mit einem Schaft 9 am Stützring 3 radialverschiebbar gelagert ist. Des Weiteren weist das Halteteil 8 einen in Axialrichtung und in Umfangsrichtung außen liegenden Teller 10 auf. Ferner weist das Halteteil 8 an der radial innen liegenden Tellerinnenseite 11 einen Vorsprung 15 auf, dessen Innenseite in Axialrichtung und in Umfangsrichtung mit der Innenseite des Schafts 9 eine durchgehende Fläche bildet.

Wie es aus Figur 1 und 2 ersichtlich ist, ist an der der Tellerinnenseite 11 abgewandten Telleraußenseite 12 eine Vorspanneinrichtung 20 abgestützt. Die Vorspanneinrichtung 20 weist eine Tellerfeder 22, eine Unterlegscheibe 23, ein Schuh 16, eine Ausgleichsscheibe 17 sowie eine Ringmutter 13 auf. Die Federkraft der Tellerfeder 22 ist radial gerichtet. Die Unterlegscheibe 23 liegt radial innenseitig auf der Telleraußenseite 12 an und in Axialrichtung ist sie am Schaft 9 angeordnet. Die Tellerfeder 22 liegt radial innenseitig auf der Unterlegscheibe 23 und in Axialrichtung ist sie am Schaft 9 angeordnet. Der Schuh 16 ist in einer Aussparung in der Innenseite des Stützrings 3 eingebracht, wobei der Schuh 16 radial innenseitig an der Tellerfeder 22 anliegt. Zwischen dem Schuh 16 und dem Stützring 3 ist die Ausgleichsscheibe 17 eingebracht. Am radial außenseitigem Ende des Schafts 9 und axial außenseitig ist die Ringmutter 13 aufgebracht, welche via einer Abstützscheibe 14 in einer außenseitigen Aussparung des Stützrings 3 abgestützt ist.

Wie es aus Figur 1 und 2 ersichtlich ist, weist der Schuh 16 einen Anschlag 18 auf, mit dem der Teller 10 bei seiner Radialbewegung anschlagen kann, so dass die Radialbewegung nach außen begrenzt ist. Die Unterlegscheibe 23 hat eine längere axiale Erstreckung als die Tellerfeder 22, so dass zwischen der Tellerfeder 22 und dem Anschlag 18 ein Tellerfederhohlraum 21 ausgebildet ist, in dem sich die Tellerfeder 22 beim Zusammenstauchen axial ausdehnen kann.

Wie es aus Figur 1 und 2 ersichtlich ist, steht der Vorsprung 15 mit dem Kippsegment 5 am Kippsegmentrücken 7 in Eingriff, so dass das Kippsegment 5 an dem Vorsprung 15 radial geführt ist. Im Kippsegment 5, an seinem Kippsegmentrücken 7 ist ein Gewinde 25 eingebracht, in das das untere Ende eines Haltestifts 24 eingebracht ist. Der Haltestift 24 ist durch das hohl ausgebildeten Halteteil 8 und eine Lochplatte 27 geführt, welche auf dem außen liegenden Ende des Halteteils 8 abgestützt ist. An der Außenseite der Lochplatte 27 ist der Haltestift 24 mit einer Haltemutter 26 versehen, mit der der Haltestift 24 auf der Lochplatte 27 abgestützt ist, so dass die minimale radiale Position des Kippsegments 5 festgelegt ist.

Wie es aus Figur 1 und 2 ersichtlich ist, kann sich das Kippsegment 5 am Vorsprung 15 radial geführt und nur durch seine Gewichtskraft beeinflusst bewegen. Dreht die Welle mit der Kippsegmentvorspanndrehzahl, so "schwimmt" sie auf einem hydrodynamischen Film auf und das auf der Welle liegende Kippsegment 5 schlägt mit seinem Kippsegmentrücken 7 and die Tellerinnenseite 11 an und auf das Kippsegment 5 wirkt zusätzlich zu der Gewichtskraft eine Kraft, die von der durch die Vorspanneinrichtung 20 eingestellte Schwellenvorspannung der Tellerfeder 22 herrührt.

Wie es aus Figur 1 und 2 ersichtlich ist, ist in dem Hohlraum zwischen dem Haltestift 24 und dem Halteteil 8 ein Ölkanal 28 ausgebildet, welcher in einem in dem Kippsegment 5 ausgebildeten Ölplenum 29 mündet. In der Kippsegmentgleitfläche 6 ist ein Ölaustritt 30 vorgesehen, der mit dem Ölplenum 29 verbunden ist.

Wie es aus Figur 2 ersichtlich ist, ist in einem Loch des Tellers 10 und des Anschlags 18 ein radial orientierter Führungsstift 19 vorgesehen, so dass das Halteteil 8 bei seinem Radialverschieben am Stützring 3 radial geführt ist.

Zur Voreinstellung des Spiels der Kippsegmente 5 wird das Kippsegmentradiallager 1 hochkant angeordnet und eine Wellenattrappe wird in das Kippsegmentradiallager 1 eingelegt. Über die Dicke der Unterlegscheibe 17 wird die gewünschte Schwellenvorspannung eingestellt. Anschließend wird die Ringmutter 13 auf Block gezogen und die Haltemutter 26 wird so weit angezogen, dass das Kippsegment 5 gerade nicht auf der Wellenattrappe aufliegt. In dieser Anordnung wird das maximale Spiel des Kippsegments 5 gemessen und wenn das Spiel nicht eine Montagespezifikation erfüllt, wird die Dicke-der Ausgleichsscheibe 17 angepasst. Anschließend wird die Ringmutter 13 so weit gelöst, dass das Kippsegment 5 mit einem vorherbestimmten Spiel über der Welle hängt. Diese Position der Ringmutter 13 wird durch eine Markierung gekennzeichnet.

Zur Endeinstellung des Spiels, nach dem Einbau des Kippsegmentradiallagers 1 in ein Maschinengehäuse und dem Einbau der Welle in das Kippsegmentradiallager wird zunächst die Ringmutter 13 auf Block gezogen und das maximale Spiel gemessen. Die Dicke der Ausgleichsscheibe 17 wird eventuell angepasst. Anschließend wird die Ringmutter 13 bis zu der Markierung gelöst und das Spiel wird gemessen. Durch Nachstellen der Ringmutter 13 wird das Spiel eventuell angepasst. Abschließend wird die Haltemutter 26 so weit gelöst, dass das Kippsegment 5 lose auf der Welle aufliegt und die Ringmutter 13 sowie die Haltemutter 26 werden gegen verdrehen gesichert.

## Patentansprüche

1. Kippsegmentradiallager für eine Einwellenströmungsmaschine,
mit einem Stützring (3), einer Kippsegmenthalterung (4) und einem Kippsegment (5), das im Einbauzustand des Kippsegmentradiallagers (1) obenliegend und radial verschiebbar von der Kippsegmenthalterung (4) an dem Stützring (3) abgestützt ist, die eine Vorspanneinrichtung (20) und ein Halteteil (8) aufweist mit einem Arretiermittel (13), einem am Stützring (3) radialverschiebbar gelagerten Schaft (9) und einem am Schaft (9) vorstehenden und befestigten Teller (10), an dem radial innenseitig das Kippsegment (5) und radial außenseitig die Vorspanneinrichtung (20) abstützbar sind,
wobei mit dem Arretiermittel (13) der Schaft (9) derart am Stützring (3) radial nach innen begrenzt festgelegt ist,
dass, erst wenn die Betriebsdrehzahl der Einwellenströmungsmaschine gleich einer vorherbestimmten Kippsegmentvorspanndrehzahl ist, das Kippsegment (5) an dem Teller (10) abgestützt und von der Vorspanneinrichtung (20) mit einer vorherbestimmten Schwellenvorspannung vorgespannt ist, wodurch mit der Vorspanneinrichtung (20) das Kippsegment (5) bei allen Betriebsdrehzahlen der Einwellenströmungsmaschine oberhalb der Kippsegmentvorspanndrehzahl in Richtung zur Welle der Einwellenströmungsmaschine hin vorgespannt ist und bei allen Betriebsdrehzahlen der Einwellenströmungsmaschine unterhalb der Kippsegmentvorspanndrehzahl das Kippsegment (5) vorspannungsfrei radial beweglich ist.

2. Kippsegmentradiallager gemäß Anspruch 1,
wobei die Vorspanneinrichtung (20) eingerichtet ist, dass die Vorspannung des Kippsegments (5) beim Betrieb der Einwellenströmungsmaschine mit einer Betriebsdrehzahl oberhalb der Kippsegmentvorspanndrehzahl mit der Betriebsdrehzahl der Einwellenströmungsmaschine zunimmt.

3. Kippsegmentradiallager gemäß Anspruch 2,
wobei die Vorspanneinrichtung (20) eine Tellerfeder (22) aufweist, die an dem Stützring (3) und an dem Kippsegment (5) radial abgestützt ist.

4. Kippsegmentradiallager gemäß einem der Ansprüche 1 bis 3,
wobei die Radialbewegung des Kippsegments (5) nach außen begrenzt ist.

5. Kippsegmentradiallager gemäß Anspruch 4,
wobei der Teller (10) an seiner radial außen liegenden Seite (12) zum Anschlagen an den Stützring (3) einen Anschlag (18) aufweist, durch den die Radialbewegung des Kippsegments (5) nach außen begrenzt ist.

6. Kippsegmentradiallager gemäß einem der Ansprüche 1 bis 5,
wobei der Schaft (9) von dem Teller (10) radial nach innen mit einem Vorsprung (15) vorsteht, der mit dem Kippsegment (5) in Eingriff steht, so dass das Kippsegment (5) radial verschiebbar und in Umfangsrichtung fest gelagert ist.

7. Kippsegmentradiällager gemäß Anspruch 6,
wobei die Kippsegmenthalterung (4) einen Haltestift (24) aufweist, mit dem die minimale radiale Position des Kippsegmentradiallagers (1) so begrenzt ist, dass das Kippsegment (5) mit dem Vorsprung (15) nicht außer Eingriff gerät.

8. Kippsegmentradiallager gemäß einem der Ansprüche 1 bis 7,
wobei das Halteteil (8) bei seinem Radialverschieben am Stützring (3) radial geführt ist.

## Claims

1. Tilting-segment radial bearing for a single-shaft turbomachine,
with a supporting ring (3), a tilting-segment mount (4) and a tilting segment (5) which, in the installed state of the tilting-segment radial bearing (1), is overhead and is supported radially displaceably on the supporting ring (3) by the tilting-segment mount (4) which has a prestressing device (20) and a holding part (8) with a locking means (13), with a shank (9) mounted radially displaceably on the supporting ring (3) and with a plate (10) which projects on and is fastened to the shank (9) and on which the tilting segment (5) can be supported radially on the inside and the prestressing device (20) can be supported radially on the outside,
the shank (9) being secured in a limited manner to the supporting ring (3) radially on the inside by the locking means (13) in such a way that the tilting segment (5) is supported on the plate (10) and is prestressed with a predetermined threshold prestress by the prestressing device (20) only when the operating rotational speed of the single-shaft turbomachine is identical to a predetermined tilting-segment prestress rotational speed, as a result of which, at all the operating rotational speeds of the single-shaft turbomachine above the tilting-segment presetress rotational speed, the tilting segment (5) is prestressed in the direction toward the shaft of the single-shaft turbomachine by the prestressing device (20), and, at all the operating rotational speeds of the single-shaft turbomachine below the tilting-segment prestress rotational speed, the tilting segment (5) is moveable, prestress-free, radially.

2. Tilting-segment radial bearing according to Claim 1, the prestressing device (20) being designed in such a way that, when the single-shaft turbomachine is operating at an operating rotational speed above the tilting-segment prestress rotational speed, the prestress of the tilting segment (5) increases with the operating rotational speed of the single-shaft turbomachine.

3. Tilting-segment radial bearing according to Claim 2, the prestressing device (20) having a cup spring (22) which is supported radially on the supporting ring (3) and on the tilting segment (5).

4. Tilting-segment radial bearing according to one of Claims 1 to 3, the radial movement of the tilting segment (5) being limited outwardly.

5. Tilting-segment radial bearing according to Claim 4, the plate (10) having on its radially outer side (12), for butting against the supporting ring (3), an abutment (18), by which the radial movement of the tilting segment (5) is limited outwardly.

6. Tilting-segment radial bearing according to one of Claims 1 to 5, the shank (9) projecting from the plate (10) radially inward with a projection (15) which is in engagement with the tilting segment (5), so that the tilting segment (5) is mounted radially displaceably and fixedly in the circumferential direction.

7. Tilting-segment radial bearing according to Claim 6, the tilting-segment mount (4) having a holding pin (24), by means of which the minimum radial position of the tilting-segment radial bearing (1) is limited such that the tilting segment (5) does not come out of engagement with the projection (15).

8. Tilting-segment radial bearing according to one of Claims 1 to 7, the holding part (8), during its radial displacement, being guided radially on the supporting ring (3).

## Revendications

1. Palier radial à segment basculant pour une turbomachine à un seul arbre,
qui comprend une bague ( 3 ) d'appui, une fixation ( 4 ) de segment basculant et un segment ( 5 ) basculant, qui, lorsque le palier ( 1 ) radial à segment basculant est à l'état monté, est en haut et, en pouvant coulisser radialement, est appuyé sur la bague ( 3 ) d'appui par la fixation ( 4 ) de segment basculant, laquelle a un dispositif ( 20 ) de précontrainte et une partie ( 8 ) de maintien ayant un moyen ( 13 ) de blocage, un fût ( 9 ) monté coulissant radialement sur la bague ( 3 ) d'appui et un plateau ( 10 ), qui est fixé sur le fût ( 9 ) en en dépassant et sur lequel, du côté intérieur radialement, le segment ( 5 ) basculant et, du côté extérieur radialement, le dispositif ( 20 ) de précontrainte peuvent s'appuyer,
dans lequel, par le moyen ( 13 ) de blocage, le fût ( 9 ) est fixé, avec limitation radialement vers l'intérieur, à la bague ( 3 ) d'appui, de manière à ce que, seulement si la vitesse de rotation en fonctionnement de la turbomachine à un seul arbre est égale à une vitesse de rotation de précontrainte du segment basculant déterminée à l'avance, le segment ( 5 ) basculant est appuyé sur le plateau ( 10 ) et est précontraint par le dispositif ( 20 ) de précontrainte à une précontrainte de seuil déterminée à l'avance, grâce à quoi, par le dispositif ( 20 ) de précontrainte, le segment ( 5 ) basculant est, à toutes les vitesses de rotation de fonctionnement de la turbomachine à un seul arbre, au-dessus de la vitesse de rotation de précontrainte du segment basculant, précontraint dans la direction allant vers l'arbre, de la turbomachine à un seul arbre et, à toutes les vitesses de rotation de fonctionnement de la turbomachine à un seul arbre en dessous de la vitesse de rotation de précontrainte du segment basculant, le segment ( 5 ) basculant est mobile radialement sans précontrainte.

2. Palier radial à segment basculant suivant la revendication 1,
dans lequel le dispositif ( 20 ) de précontrainte est conçu de manière à ce que la précontrainte du segment ( 5 ) basculant augmente avec la vitesse de rotation de fonctionnement de la turbomachine à un seul arbre, lors du fonctionnement de la turbomachine à un seul arbre à une vitesse de rotation de fonctionnement au-dessus de la vitesse de rotation de précontrainte du segment basculant.

3. Palier radial à segment basculant suivant la revendication 2,
dans lequel le dispositif ( 20 ) de précontrainte a un ressort ( 22 ) à disque, qui est appuyé radialement sur la bague ( 3 ) d'appui et sur le segment ( 5 ) basculant.

4. Palier radial à segment basculant suivant l'une des revendications 1 à 3,
dans lequel le mouvement radial du segment ( 5 ) basculant est limité vers l'extérieur.

5. Palier radial à segment basculant suivant la revendication 4,
dans lequel le plateau ( 10 ) a, du côté se trouvant à l'extérieur radialement, pour buter sur la bague ( 3 ) d'appui, une butée ( 18 ), par laquelle le mouvement radial du segment ( 5 ) basculant est limité vers l'extérieur.

6. Palier radial à segment basculant suivant l'une des revendications 1 à 5,
dans lequel le fût ( 9 ) est en saillie du plateau ( 10 ) radialement vers l'extérieur par une saillie ( 15 ), qui est en prise avec le segment ( 5 ) basculant, de sorte que le segment ( 5 ) basculant peut coulisser radialement et est monté fixé dans la direction périphérique.

7. Palier radial à segment basculant suivant la revendication 6,
dans lequel la fixation ( 4 ) du segment basculant a une broche ( 24 ) de maintien, par laquelle la position radiale minimum du palier ( 1 ) radial à segment basculant est limitée, de manière à ce que le segment ( 5 ) basculant ne vienne pas hors de prise avec la saillie ( 15 ).

8. Palier radial à segment basculant suivant l'une des revendications 1 à 7,
dans lequel la partie ( 8 ) de maintien est, lors de son coulissement radial, guidée radialement sur la bague ( 3 ) d'appui.
